(19) **Europäisches Patentamt / European Patent Office / Office européen des brevets**

(11) **EP 1 621 084 B1**

(12) **EUROPEAN PATENT SPECIFICATION**

(45) Date of publication and mention of the grant of the patent:
**02.04.2008 Bulletin 2008/14**

(51) Int Cl.:
*A23L 2/66* (2006.01)   *A23L 2/54* (2006.01)
*A23C 9/154* (2006.01)   *A23C 9/152* (2006.01)
*A23C 11/06* (2006.01)   *A23G 1/44* (2006.01)
*A23G 3/44* (2006.01)   *A23G 9/38* (2006.01)
*A23L 1/305* (2006.01)

(21) Application number: **05076481.0**

(22) Date of filing: **27.06.2005**

(54) **Aerated food products containing hydrophobin**

Belüftete, Hydrophobin enthaltende Nahrungsmittel

Produits alimentaires aérés, contenant de l'hydrophobine

(84) Designated Contracting States:
**AT BE BG CH CY CZ DE DK EE ES FI FR GB GR HU IE IS IT LI LT LU MC NL PL PT RO SE SI SK TR**

(30) Priority: **27.07.2004 EP 04254483**
**03.03.2005 EP 05251282**

(43) Date of publication of application:
**01.02.2006 Bulletin 2006/05**

(73) Proprietors:
• **UNILEVER PLC**
**London EC4P 4BQ (GB)**
Designated Contracting States:
**CY GB IE**
• **UNILEVER N.V.**
**3013 AL Rotterdam (NL)**
Designated Contracting States:
**AT BE BG CH CZ DE DK EE ES FI FR GR HU IS IT LI LT LU MC NL PL PT RO SE SI SK TR**

(72) Inventors:
• **Aldred, Deborah Lynne,**
**Unilever R&D**
**Sharnbrook,**
**Bedfordshire MK44 1LQ (GB)**
• **Berry, Mark John,**
**Unilever R&D**
**Sharnbrook,**
**Bedfordshire MK44 1LQ (GB)**
• **Cebula, Deryck Jozef,**
**Unilever R&D**
**Sharnbrook,**
**Bedfordshire MK44 1LQ (GB)**
• **Cox, Andrew Richard,**
**Unilever R&D**
**Sharnbrook,**
**Bedfordshire MK44 1LQ (GB)**

• **Golding, Matthew Duncan,**
**Unilever R&D Vlaardingen**
**3133 AT Vlaardingen (NL)**
• **Golding, Sarah,**
**Unilever R&D Vlaardingen**
**3133 AT Vlaardingen (NL)**
• **Keenan, Robert Daniel,**
**Unilever R&D**
**Sharnbrook,**
**Bedfordshire MK44 1LQ (GB)**
• **Malone, Mark Emmett,**
**Fonterra Research Centre**
**Palmerston North (NZ)**
• **Twigg, Sarah,**
**Unilever R&D**
**Sharnbrook,**
**Bedfordshire MK44 1LQ (GB)**

(74) Representative: **Hugot, Alain et al**
**Unilever Patent Group**
**Colworth House**
**Sharnbrook**
**Bedford, MK44 1LQ (GB)**

(56) References cited:
WO-A-96/41882          WO-A-03/015530
DE-U- 29 715 519        US-A- 5 215 777
US-A- 6 096 867

• **DATABASE WPI Section Ch, Week 200444 Derwent Publications Ltd., London, GB; Class B04, AN 2004-465457 XP002313777 & KR 2004 018 844 A (KIM J G) 4 March 2004 (2004-03-04)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

- **SCHOLMEIJER K ET AL: "FUNGAL HYDROPHOBINS IN MEDICAL AND TECHNICAL APPLICATIONS" APPLIED MICROBIOLOGY AND BIOTECHNOLOGY, SPRINGER VERLAG, BERLIN, DE, vol. 56, no. 1/2, July 2001 (2001-07), pages 1-8, XP001120015 ISSN: 0175-7598**

## Description

Field of the invention

The present invention relates to frozen products that include hydrophobins.

Background to the invention

During storage, the ice crystals present in frozen products tend to increase in size as a result of dynamic processes such as recrystallisation. This can lead to poor product characteristics such as poor appearance and unacceptable mouthfeel and/or to product damage. It has been suggested previously to use proteins termed "anti-freeze proteins" (also known as "ice structuring proteins") to inhibit the process of ice recrystallisation.

Summary of the invention

We have found that a class of proteins found in fungi, termed hydrophobins, are also able to inhibit ice crystal growth in frozen products.

Accordingly, the present invention provides a frozen composition, such as a frozen food product, comprising hydrophobin, with the proviso that hydrophobin from Tricholoma matsutake is excluded. Preferably the hydrophobin is in isolated form. In a related aspect, the present invention provides a frozen composition, such as a frozen food product, comprising hydrophobin in a form capable of assembly at an air-liquid surface and a frozen composition, such as a frozen food product, to which hydrophobin in said form has been added.

Preferably the hydrophobin is a class II hydrophobin.

In a preferred embodiment, hydrophobin is present in an amount of at least 0.001 wt%, more preferably at least 0.01 wt%.

In one embodiment, the frozen composition is aerated. In another embodiment, the frozen composition is unaerated.

The present invention also provides the use of hydrophobin in a method of inhibiting ice crystal growth in a frozen composition. Preferably the hydrophobin is used to inhibit ice recrystallisation.

In a related aspect, the present invention also provides the use of hydrophobin in a method of modifying ice crystal habit in a frozen composition.

The present invention further provides a method of inhibiting ice crystal growth, for example ice recrystallisation, in a frozen composition which method comprises adding to the composition hydrophobin prior to and/or during freezing of the composition.

In a related aspect, the present invention provides a method of modifying ice crystal habit in a frozen composition which method comprises adding to the composition hydrophobin prior to and/or during freezing of the product.

In a preferred embodiment of the above-described uses and methods, the composition is a frozen food product.

Detailed description of the invention

Unless defined otherwise, all technical and scientific terms used herein have the same meaning as commonly understood by one of ordinary skill in the art (e.g. in chilled confectionery/frozen confectionery manufacture, chemistry and biotechnology). Definitions and descriptions of various terms and techniques used in chilled/frozen confectionery manufacture are found in Ice Cream, 4th Edition, Arbuckle (1986), Van Nostrand Reinhold Company, New York, NY. Standard techniques used for molecular and biochemical methods can be found in Sambrook et al., Molecular Cloning: A Laboratory Manual, 3rd ed. (2001) Cold Spring Harbor Laboratory Press, Cold Spring Harbor, N.Y. and Ausubel et al., Short Protocols in Molecular Biology (1999) 4th Ed, John Wiley & Sons, Inc. - and the full version entitled Current Protocols in Molecular Biology).

*Hydrophobins*

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

$Xn\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m$ (SEQ ID No. 1)

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$$X_n\text{-}C\text{-}X_{1\text{-}50}\text{-}C\text{-}X_{0\text{-}5}\text{-}C\text{-}X_{1\text{-}100}\text{-}C\text{-}X_{1\text{-}100}\text{-}X_{1\text{-}50}\text{-}C\text{-}X_{0\text{-}5}\text{-}C\text{-}X_{1\text{-}50}\text{-}C\text{-}X_m \text{ (SEQ ID No. 2)}$$

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.

Hydrophobin-like proteins have also been identified in filamentous bacteria, such as *Actinomycete* and *Steptomyces* sp. (WO01/74864). These bacterial proteins, by contrast to fungal hydrophobins, form only up to one disulphide bridge since they have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in *Agaricus bisporus*; and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade -'generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO 01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85

KR 2004 0 18844 discloses an isolation and purification method of hydrophobin protein from Tricholoma matsutake.

*Frozen Compositions*

Frozen compositions/frozen products include frozen food products and frozen biological materials. Frozen food products include frozen plant-derived materials, such as fruit and vegetables, frozen animal-derived materials, such as frozen meat and fish, as well as frozen processed food products, such as ready-made meals, sauces and frozen confections such as ice cream, milk ice, frozen yoghurt, sherbet, slushes, frozen custard, water ice, sorbet, granitas and frozen purees.

Frozen compositions of the invention can be aerated or unaerated. The term "aerated" means that gas has been intentionally incorporated into the product, such as by mechanical means. The gas is preferably any food-grade gas such as air, nitrogen or carbon dioxide. The extent of aeration, especially in the context of aerated food products, is typically defined in terms of "overrun". In the context of the present invention, %overrun is defined in volume terms as:

$$((\text{volume of the final aerated product} - \text{volume of the mix}) / \text{volume of the mix}) \times 100$$

The amount of overrun present in the product will vary depending on the desired product characteristics. For example, the level of overrun in ice cream is typically from about 70 to 100%, whereas the overrun in water ices is from 25 to 30%.

An unaerated composition, such as a frozen food product, preferably has an overrun of less then 20%, more preferably less than 10%. An unaerated frozen food product is not subjected to deliberate steps such as whipping to increase the gas content. Nonetheless, it will be appreciated that during the preparation of unaerated frozen food products, low levels of gas, such as air, may be incorporated in the product.

Frozen confectionery products

Frozen confections include confections that typically include milk or milk solids, such as ice cream, milk ice, frozen yoghurt, sherbet and frozen custard, as well as frozen confections that do not contain milk or milk solids, such as water ice, sorbet, granitas and frozen purees.

US 6 096 867 refers to the use of plant anti-freeze proteins in frozen confectionary products.

The frozen confections may be in the form of a composite product where at least one portion or region of the product, such as a core or layer, does not contain hydrophobin. An example of this would be a product containing a core of ice cream which lacks hydrophobin, coated in a layer of ice cream, milk ice or water ice that does contain hydrophobin. It will be appreciated that in the case of a composite product, the wt% amount of hydrophobin added is calculated solely in relation to those components of the confection that contain hydrophobin and not in relation to the complete product.

Aerated frozen confections preferably have an overrun of from 25% to 300%, such as from 25% to 150%, more preferably from 50 to 150%.

The amount of hydrophobin present in the frozen compositions of the invention will generally vary depending on the product formulation and, in the case of aerated products, the volume of the air phase. Typically, the product will contain at least 0.001 wt%, hydrophobin, more preferably at least 0.005 or 0.01 wt%. Typically the product will contain less than 1 wt% hydrophobin. The hydrophobin may be from a single source or a plurality of sources e.g. the hydrophobin can a mixture of two or more different hydrophobin polypeptides.

Preferably the hydrophobin is class II hydrophobin.

Generally, the hydrophobin will be in isolated form, typically at least partially purified, such as at least 10% or 20% pure, based on weight of solids. Thus, the hydrophobin is not added as part of a naturally-occurring organism, such as a mushroom, which naturally expresses hydrophobins. Instead, the hydrophobin will typically either have been extracted from a naturally-occurring source or obtained by recombinant expression in a host organism.

Compositions for producing a frozen food product of the invention include liquid premixes, for example premixes used in the production of frozen confectionery products, and dry mixes, for example powders, to which an aqueous liquid, such as milk or water, is added prior to or during freezing.

The compositions for producing a frozen food product of the invention, will comprise other ingredients, in addition to the hydrophobin, which are normally included in the food product, e.g. sugar, fat, emulsifiers, flavourings etc. The compositions may include all of the remaining ingredients required to make the food product such that the composition is ready to be processed to form a frozen food product of the invention.

Dry compositions for producing a frozen food product of the invention will also comprise other ingredients, in addition to the hydrophobin, which are normally included in the food product, e.g. sugar, fat, emulsifiers, flavourings etc. The compositions may include all of the remaining non-liquid ingredients required to make the food product such that all that the user need only add an aqueous liquid, such as water or milk, and the composition is ready to be processed to form a frozen food product of the invention. These dry compositions, examples of which include powders and granules, can be designed for both industrial and retail use, and benefit from reduced bulk and longer shelf life.

The hydrophobin is added to a composition in a form and in an amount such that it is available to inhibit ice crystal growth, such as ice recrystallisation, and/or modify ice crystal habit. By the term "added", we mean that the hydrophobin is deliberately introduced into the composition for the purpose of taking advantage of its ability to inhibit ice crystal growth and/or modify ice crystal habit. Consequently, where ingredients are present or added that contain fungal contaminants, which may contain hydrophobin polypeptides, this does not constitute adding hydrophobin within the context of the present invention.

Typically, the hydrophobin is added to the product in a form that is capable of self-assembly at an air-liquid surface.

Typically, the hydrophobin is added to the compositions of the invention in an isolated form, typically at least partially purified, such as at least 10% pure, based on weight of solids. By "added in isolated form", we mean that the hydrophobin is not added as part of a naturally-occurring organism, such as a mushroom, which naturally expresses hydrophobins. Instead, the hydrophobin will typically either have been extracted from a naturally-occurring source or obtained by recombinant expression in a host organism.

The added hydrophobin can be used to reduce or inhibit the growth of ice crystals, for example to inhibit the process of ice recrystallisation, and/or to modify ice crystal habit (i.e. ice crystal shape). Inhibition and/or modification can take place during freezing and or after freezing e.g. during storage. Inhibition of ice crystal growth and/or ice crystal habit during freezing can be used to alter the texture of the product. Inhibition of ice recrystallisation improves product stability in response to thermal abuse.

Hydrophobins can also be used to inhibit ice crystal growth, such as ice recrystallisation, and/or ice crystal habit in cellular biological materials. This will assist in reducing damage to cells as a result of the freezing processes used to preserve biological materials. Such biological materials include cultures of unicellular organisms and cell lines; gametes e.g. sperm and ova; and tissue and organs derived from multicellular organisms, both plants and animals.

Accordingly the present invention also provides a frozen cellular biological material comprising hydrophobin in isolated form, preferably comprising at least 0.001 wt% hydrophobin, with the proviso that human beings are specifically excluded.

The present invention further provides the use of hydrophobin to inhibit ice crystal growth, such as ice recrystallisation, and/or modify ice crystal habit in a frozen cellular biological material. Inhibition/modification can be during and/or after freezing of the biological material.

The present invention will now be described further with reference to the following examples which are illustrative only and non-limiting.

<u>Description of the figures</u>

Figure 1 is a diagram showing shear regimes for the aerated frozen products

Figure 2 is a scanning electron micrograph of aerated frozen product microstructures - fresh and after abuse (Magnification x100)

Figure 3 is a scanning electron micrograph of aerated frozen product microstructures - fresh and after abuse (Magnification x300)

Figure 4 shows scanning electron micrographs of unaerated product microstructures (no HFBII) (50x magnification).

Figure 5 shows scanning electron micrographs of unaerated product microstructures (with HFBII) (50x magnification).

**Example 1 - Aerated Frozen Products**

Aerated frozen products were prepared using 3 types of protein:

A: Sodium Caseinate (Na Cas)
B: Skimmed Milk Powder (SMP)

C: Hydrophobin (HFBII) from Trichoderma reesei

Microstructural and physical properties of the products were compared, both before and after temperature abuse regimes.

Materials

Details of the materials used are summarised in Table 1 and the formulations from which each of the aerated frozen products was prepared are shown in Table 2.

Table 1. Materials used

| Ingredient | Composition | Supplier |
|---|---|---|
| Sodium caseinate | 88-90% protein, 1.5% fat, 6% moisture | DMV International, The Netherlands. |
| Skimmed milk powder | 33-36% protein, 0.8% fat, 3.7% moisture | United Milk, UK. |
| Hydrophobin type II (HFB II) | Purified from *Trichoderma reesei* essentially as described in WO00/58342 and Linder et al, 2001, Biomacromolecules 2: 511-517). | VTT Biotechnology, Finland. |
| Refined Coconut Oil | | Van den Bergh Foods, Limited |
| Sucrose | | Tate and Lyle, UK. |

Table 2. Formulations used

| | Mix A | Mix B | Mix C |
|---|---|---|---|
| Ingredient | Concentration /wt% | | |
| Sodium caseinate | 2.0 | - - | - - |
| Skimmed milk powder | - - | 11.42 | - - |
| HFB II | - - | -- | 0.2 |
| Coconut Oil | 5.0 | 5.0 | 5.0 |
| Sucrose | 25.0 | 20.0 | 25.0 |
| Water | 68.0 | 63.58 | 69.8 |

Preparation of the Aerated Frozen Products

**Mix (Emulsion) preparation**

All mixes were made in 100 g batches. For Mixes A and B (containing sodium caseinate and skimmed milk powder, respectively), the protein was combined with the sucrose and dispersed into cold water using a magnetic stirrer. The solution was then heated to 60°C with stirring and held for 5 minutes before being cooled to 40°C. Molten coconut fat was then added and the aqueous mix immediately sonicated (Branson Sonifer with 6.4mm tapered tip) for 3 minutes at 70% amplitude with the tip well immersed in the solution. The emulsion was then cooled rapidly in a -10°C water bath until the solution temperature was 5°C, to crystallise the fat droplets. The mixes were stored at 5°C until further use.

For Mix C (containing HFB II), the sucrose was first dispersed into cold water with stirring. Then, half of the required concentration of HFB II was added to this as an aliquot. The solution was then gently sonicated in a sonic bath for 30 seconds to fully disperse the HFB II. This solution was then stirred on a magnetic stirrer and heated to 40°C. Before the molten fat was added the solution was again sonicated in a sonic bath for 30 seconds. The molten fat was then added and the mix was emulsified and cooled as described for Mixes A and B. A further aliquot of HFB II was then added to this cold solution to bring the HFB II concentration up to 0.2%. The first 0.1 % of HFB II was for emulsifying and stabilising the fat. The second addition of HFB II would provide adequate excess HFBII to provide good aeration and foam stability.

Particle size analysis on the chill emulsions was performed using a Malvern Mastersizer 2000.

Analysis of Emulsions

Following this methodology, we were able to make emulsions with small fat droplets. A summary of oil droplet sizes measured is shown in Table 3.

Table 3. Emulsion particle size as measured using the Malvern Mastersizer 2000

| Mix | Fat droplet diameter |
|---|---|
|  | D(3,2) / $\mu$m |
| A (Na Cas) | 0.4 |
| B (SMP) | 0.25 |
| C (HFB II) | 1.88 |

***Shear Freezing Process***

80 ml of mix was sheared and frozen simultaneously in a cylindrical, vertically mounted, jacketed stainless steel vessel with internal proportions of 105 mm height and diameter 72 mm. The lid of the vessel fills 54% of the internal volume leaving 46% (180 ml) for the sample. The rotor used to shear the sample consists of a rectangular impeller of the correct proportions to scrape the surface edge of the container as it rotates (dimensions 72 mm x 41.5mm). Also attached to the rotor are two semi-circular (60 mm diameter) high-shear blades positioned at a 45° angle to the rectangular attachment. The vessel is surrounded by a jacket through which coolant flows.

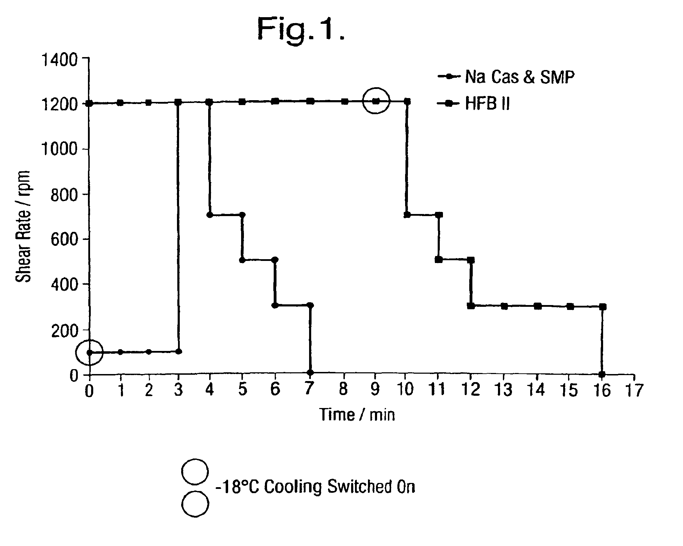

In essence an aerated and frozen prototype is produced as follows: The mix inside the enclosed container is mixed with an impeller at a high shear rate in order to incorporate air. Simultaneously, the coolant flows around the container jacket to cool and freeze the mix. The impeller also scrapes the inside wall, removing the ice that forms there and incorporating this into the rest of the mix. High shear is used to initially aerated the mix, and then the shear rate is slowed in order to allow better cooling and freezing. The shear regimes used for each mix are graphically presented in Figure 1.

For the freezing and aeration step with Mixes A and B (containing sodium caseinate and skimmed milk powder, respectively) the coolant (set at -18°C) was set to circulate from Time = 0 minutes. The relatively slow stirring at the start for Mixes A and B allowed for cooling of the mix and generation of some viscosity (via ice formation and incorporation) prior to aeration using higher shear. A short time at high speed incorporated the air and then the speed was stepped down to allow the samples to reach at least -5°C.

For Mix C (containing HFB II) the pot was chilled to about 5°C and the sample added and the high shear for aerated started. The coolant (set at -18°C) was not switched to circulate on until 9 minutes due to the increased time required to generate 100% overrun. Once the coolant was switched on to circulate (at 9 minutes), the same shear-cooling pattern as previous (for A and B) was adopted.

At the end of the process, overrun was measured and samples (approximately 15 g) were placed into small pots. Each product was cooled further for 10 minutes in a freezer set at -80°C before being stored at -20°C.

Analysis of Aerated Frozen Products

All aerated frozen products were stored under two temperature regimes:

(a) -20°C. Subsequent analysis was made within one week of production and we deem this as "fresh" product.
(b) Temperature abused samples were subject to storage at -10°C for 1 or 2 weeks, and then subsequently stored at -20°C before analysis.

Table 4. Process details and product overrun for products prepared from Mixes A, B, and C.

| Sample | Shear time at 1200rpm | Overrun | End product temperature |
|---|---|---|---|
|  | min | % | °C |
| A (Na Cas) | 1 | 103 | -5.3 |
| B (SMP) | 1 | 98 | -8 |

(continued)

| Sample | Shear time at 1200rpm | Overrun | End product temperature |
|---|---|---|---|
| B (SMP) | 1 | 94 | -5.6 |
| C (HFB II) | 10 | 75 | -5 |

Final products were analysed as follows:

Overrun of freshly made product
SEM analysis on fresh and temperature abused product
Melting behaviour on fresh and temperature abused product

**Overrun**

The overrun for each of the products is summarised in Table 4. All of the mixes were aeratable and incorporated significant amounts of air.

**Microstructural Stability: Methodology**

*Scanning Electron Microscopy (SEM)*

The microstructure of each products was visualised using Low Temperature Scanning Electron Microscopy (LTSEM). The sample was cooled to -80 °C on dry ice and a sample section cut. This section, approximately 5mmx5mmx10mm in size, was mounted on a sample holder using a Tissue Tek : OCT™ compound (PVA 11%, Carbowax 5% and 85% non-reactive components). The sample including the holder was plunged into liquid nitrogen slush and transferred to a low temperature preparation chamber: *Oxford Instrument CT1500HF* . The chamber is under vacuum, approximately $10^{-4}$ bar, and the sample is warmed up to -90 °C. Ice is slowly etched to reveal surface details not caused by the ice itself, so water is removed at this temperature under constant vacuum for 60 to 90 seconds. Once etched, the sample is cooled to -110°C ending up the sublimation, and coated with gold using argon plasma. This process also takes place under vacuum with an applied pressure of $10^{-1}$ millibars and current of 6 milliamps for 45 *seconds.* The sample is then transferred to a conventional Scanning Electron Microscope (JSM 5600), fitted with an Oxford Instruments cold stage at a temperature of -160°C. The sample is examined and areas of interest captured via digital image acquisition software.

*Freeze Fracture Transmission Electron Microscopy (TEM)*

A small block, approximately 5mm x 3mm x 3mm was cut from the sample on an aluminium plate placed on a bed of dry ice using a cold scalpel. The sample block was mounted vertically in a large 'top hat' freeze fracture holder using Tissue-Tek O.C.T Compound (Sakura Finetek, Europe BV). The holder was immediately placed in the transfer device of the Cressingtion CFE-50 under liquid nitrogen and transferred to the freeze fracture chamber (-180°C). The sample was fractured with one single blow from the swinging microtome knife, and then etched for 10 minutes at -95°C. The etched surface was rotary shadowed (45°) with platinum/carbon to a thickness of 2nm then coated with carbon to a thickness of 10nm. The coated sample was removed from the chamber and transfer device and the metal replica floated off the sample, onto water. The replica pieces were cleaned in chromic acid and washed several times with water before being collected on 400 mesh copper EM grids. The grids were allowed to dry before examination by TEM.
TEM examination was carried out using a JEOL 1200 EX II microscope operated at 100KV. Images were obtained using a Bioscan camera and Digital Micrograph software (Gatan Inc).

**Microstructural Analysis: Results**

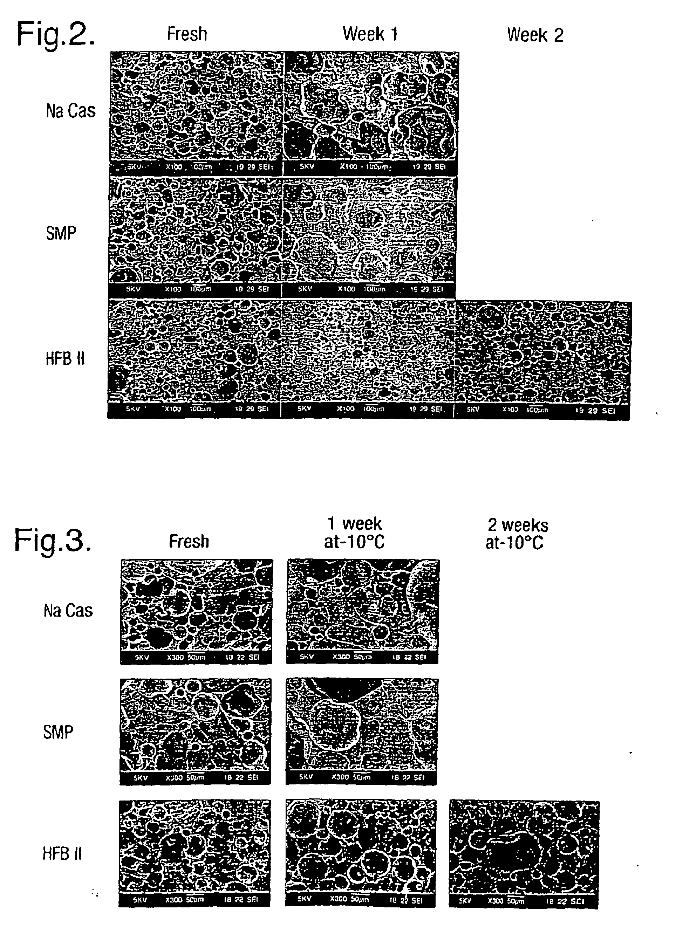

Scanning Electron Microscopy (SEM) was used to examine the microstructure of the fresh and temperature abused frozen products. Representative images can be seen in Figures 2 and 3 at different magnifications.
The results from the fresh samples showed that HFB II containing product (prepared from Mix C) were significantly and surprisingly different to those containing more conventional proteins (i.e. Mix A or B). The different properties observed were: smaller air cells, smaller ice crystals, more angular ice crystals, and slightly more accreted ice crystals. For products A and B, we approximate the ice crystal size in the fresh samples to be 50-100 $\mu$m diameter. For product C, we approximate the ice crystal size to be 40-60 $\mu$m diameter.

After temperature abuse the SEM images clearly show that the HFB II containing product (from Mix C) has retained its original microstructure, i.e. there is relatively little apparent ice crystal and air bubble coarsening. This is the case after 1 and 2 weeks storage at -10°C. However, the prototypes containing Na Cas and SMP (from Mix A and B, respectively) show very severe coarsening of the gas and ice structure under temperature abused at -10°C after just one week.

Overall, it is clear that the frozen product made containing HFBII shows much greater stability to temperature abuse than the frozen product made using sodium caseinate or skim milk powder. HFBII has an influence on both air bubble and ice crystal size and stability.

**Melting Behaviour: Methodology**

Samples of frozen product were placed on a metal grid at room temperature (20°C). Differences in the way the products melted, notably shape retention and foam stability, were observed as a function of time.

**Melting Behaviour: Results**

These microstructural differences (stable foam and stable ice) had some impact on the melting behavior of the frozen product. The aerated frozen sample made from Mix C (containing HFBII) retained its shape better on melting, compared to the product made with sodium caseinate or skimmed milk powder (i.e. Mixes A and B, respectively).

As the ice melted and formed water, it flowed through the melting grid. However, for the product with HFBII, much of the foam also remained on the grid with some stable drops of foam observed beneath (data not shown) - neither of these characteristics was observed with the conventional proteins (sodium caseinate and skimmed milk powder). This illustrates the differences in the foam stability between each of the proteins used.

**Textural Differences between Products A, B, and C**

Clear differences in texture between the three samples could also be observed after one week storage at -10°C (i.e. temperature abused samples). On handling the product made using sodium caseinate (A) and skimmed milk powder (B), these were noticed to have a very soft and very flaky texture, which was difficult to cleanly remove from the silicon paper used to line the sample pot. The product made using HFBII (C), on the other hand, was very firm and released from the silicon paper lining the sample pot very cleanly. In other words, the product prepared using HFBII shows much greater stability to temperature abuse on both a microscopic and macroscopic scale than product prepared using sodium caseinate or skim milk powder.

**Example 2: Non-aerated frozen products**

Two solutions were prepared, one containing hydrophobin HFBII from *Trichoderma reesei,* the other not. The compositions of the solutions were as shown in Table 5.

Table 5 - Formulations for non-aerated products

|  | Sample 1 | Sample 2 |
|---|---|---|
| Ingredient | *Concentration / wt%* | |
| HFB II | 0 | 0.1 |
| Xanthan | 0.5 | 0.5 |
| Sucrose | 25.0 | 25.0 |
| Water | 74.5 | 74.4 |

The HFBII was supplied by VTT Biotechnology, as described above, and the sucrose by Tate & Lyle. The xanthan was a cold-water dispersible grade (Keltrol RD) supplied by CP Kelco (Atlanta, USA).

Preparation and analysis of the non-aerated frozen products

Both solutions were prepared in 100 g batches. The sucrose/xanthan solution was prepared by adding the required amount of deionised water at room temperature to a dry mixture of sucrose and xanthan. This was then mixed using a magnetic stirrer until the solutes were completely dissolved. In the case of Sample 2, HFBII was then added as an aliquot of a 5.3 mg/ml solution, after which the solution was mixed again on the magnetic stirrer for a further 10 minutes.

Freezing of the non-aerated solutions was carried out quiescently (i.e. without simultaneous application of shear). Each solution was used to fill a small petri dish of 8 ml volume. These were then placed within a domestic freezer cabinet at -18°C for 24 hours, during which period freezing of the samples occurred.

Following freezing, the microstructure of each sample was analysed by SEM using the same preparation method as described in Example 1.

Microstructural analysis - results

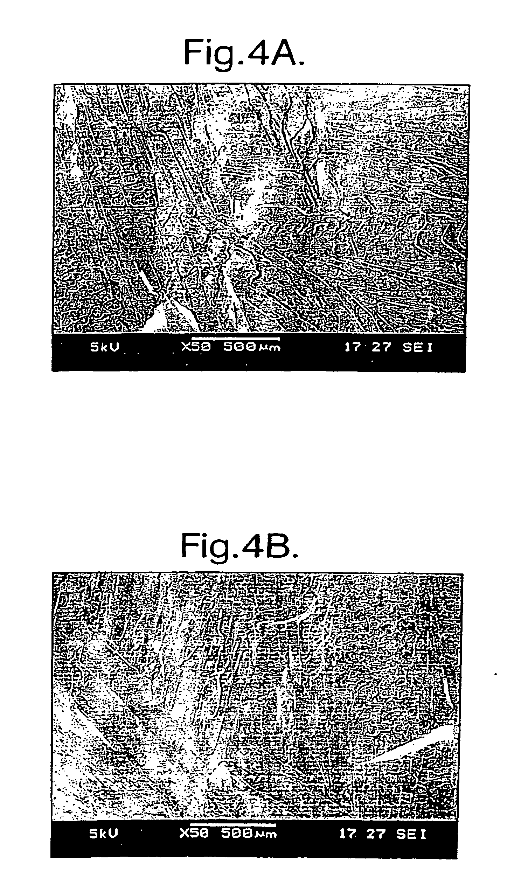

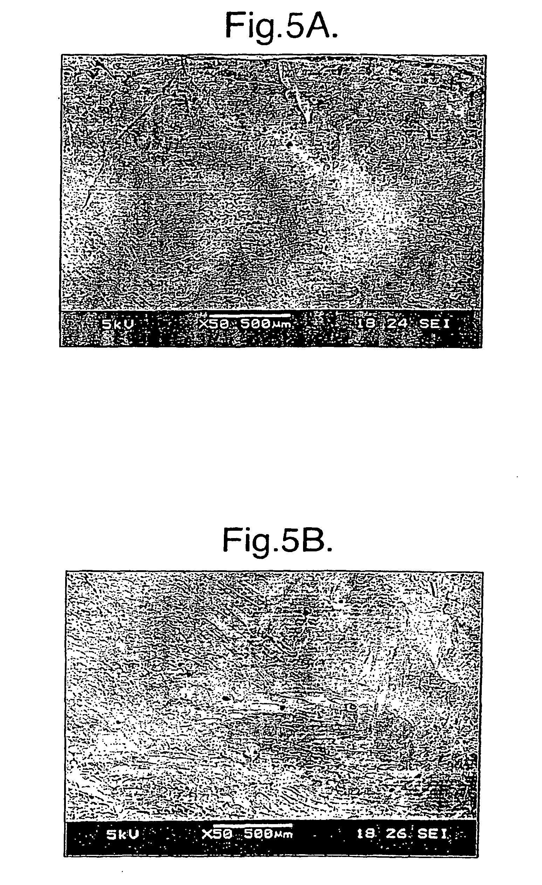

Representative SEM images of each sample at 50x magnification can be seen in Figures 4 and 5. It can be discerned that the microstructure of the solution containing HFBII (sample 2) is finer and contains ice crystal with smaller characteristic dimensions. For instance, the elongated dendritic structures in sample 1 (Figure 4) are wider and longer than those seen in sample 2 (Figure 5). This illustrates the influence of hydrophobin on reducing the ice crystal growth process- resulting in crystals of smaller size.

**Claims**

1. A frozen composition comprising hydrophobin in isolated form, with the proviso that hydrophobin from Tricholoma matsutake is excluded.

2. A frozen composition according to claim 1 comprising at least 0.001 wt% hydrophobin.

3. A frozen composition comprising at least 0.001 wt% hydrophobin, with the proviso that hydrophobin from Tricholoma matsutake is excluded.

4. A frozen composition according to any one of claims 1 to 3 wherein the hydrophobin is a class II hydrophobin.

5. A frozen composition according to any one of claims 1 to 3 which is unaerated.

6. A frozen composition according to any one of the preceding claims which is a food product.

7. A frozen food product according to claim 6 which is a frozen confectionery product.

8. Use of hydrophobin in inhibiting ice crystal growth in a frozen composition.

9. Use according to claim 8 wherein the frozen composition is a food product.

10. Use of hydrophobin in modifying ice crystal habit in a frozen composition.

11. Use according to claim 10 wherein the frozen composition is a food product.

12. Use of a hydrophobin in improving the temperature tolerance of a frozen composition.

13. Use according to claim 12 wherein the frozen composition is a food product.

**Patentansprüche**

1. Gefrorene Zusammensetzung, welche Hydrophobin in isolierter Form umfasst, mit der Maßgabe, dass Hydrophobin von Tricholoma matsutake ausgeschlossen ist.

2. Gefrorene Zusammensetzung gemäß Anspruch 1, welche mindestens 0,001 Gew.-% Hydrophobin umfasst.

3. Gefrorene Zusammensetzung, welche mindestens 0,001 Gew.-% Hydrophobin umfasst, mit der Maßgabe, dass Hydrophobin von Tricholoma matsutake ausgeschlossen ist.

**4.** Gefrorene Zusammensetzung gemäß einem der Ansprüche 1 bis 3, worin das Hydrophobin ein Hydrophobin der Klasse II ist.

**5.** Gefrorene Zusammensetzung gemäß einem der Ansprüche 1 bis 3, welche unbelüftet ist.

**6.** Gefrorene Zusammensetzung gemäß einem der vorhergehenden Ansprüche, welche ein Nahrungsmittelprodukt ist.

**7.** Gefrorenes Nahrungsmittelprodukt gemäß Anspruch 6, welches ein gefrorenes Konfektprodukt ist.

**8.** Verwendung von Hydrophobin beim Hemmen von Eiskristallwachstum in einer gefrorenen Zusammensetzung.

**9.** Verwendung gemäß Anspruch 8, worin die gefrorene Zusammensetzung ein Nahrungsmittelprodukt ist.

**10.** Verwendung von Hydrophobin beim Modifizieren von Eiskristallhabitus in einer gefrorenen Zusammensetzung.

**11.** Verwendung gemäß Anspruch 10, worin die gefrorene Zusammensetzung ein Nahrungsmittelprodukt ist.

**12.** Verwendung eines Hydrophobins beim Verbessern der Temperaturtoleranz einer gefrorenen Zusammensetzung.

**13.** Verwendung gemäß Anspruch 12, worin die gefrorene Zusammensetzung ein Nahrungsmittelprodukt ist.


**Revendications**

**1.** Composition congelée contenant de l'hydrophobine sous forme isolée, à condition que l'hydrophobine de Trichloloma matsutake soit exclue.

**2.** Composition congelée selon la revendication 1, comprenant au moins 0,001 % en poids d'hydrophobine.

**3.** Composition congelée selon la revendication 1, comprenant au moins 0,001 % en poids d'hydrophobine, à condition que l'hydrophobine de Trichloloma matsutake soit exclue.

**4.** Composition congelée selon l'une quelconque des revendications 1 à 3, dans laquelle l'hydrophobine est une hydrophobine de classe II.

**5.** Composition congelée selon l'une quelconque des revendications 1 à 3 qui n'est pas aérée.

**6.** Composition congelée selon l'une quelconque des revendications précédentes, qui est un produit alimentaire.

**7.** Produit alimentaire congelé selon la revendication 6, qui est une confiserie glacée.

**8.** Utilisation d'hydrophobine pour inhiber le développement des cristaux de glace dans une composition congelée.

**9.** Utilisation selon la revendication 8, dans laquelle la composition congelée est un produit alimentaire.

**10.** Utilisation d'hydrophobine pour modifier le comportement des cristaux de glace dans une composition congelée.

**11.** Utilisation selon la revendication 10, dans laquelle la composition congelée est un produit alimentaire.

**12.** Utilisation d'une hydrophobine pour améliorer la tolérance à la température d'une composition congelée.

**13.** Utilisation selon la revendication 12, dans laquelle la composition congelée est un produit alimentaire.

# Fig.1.

Legend:
- Na Cas & SMP
- HFB II

Y-axis: Shear Rate / rpm (0, 200, 400, 600, 800, 1000, 1200, 1400)

X-axis: Time / min (0, 1, 2, 3, 4, 5, 6, 7, 8, 9, 10, 11, 12, 13, 14, 15, 16, 17)

○○ -18°C Cooling Switched On

## Fig.2.

|  | Fresh | Week 1 | Week 2 |

Na Cas

SMP

HFB II

## Fig.3.

|  | Fresh | 1 week at-10°C | 2 weeks at-10°C |

Na Cas

SMP

HFB II

# Fig.4A.

# Fig.4B.

# Fig.5A.

# Fig.5B.

## REFERENCES CITED IN THE DESCRIPTION

**Patent documents cited in the description**

- WO 0174864 A
- WO 9641882 A
- WO 0157076 A
- KR 2004018844
- US 6096867 A
- WO 0058342 A

**Non-patent literature cited in the description**

- **ARBUCKLE.** Ice Cream. Van Nostrand Reinhold Company, 1986
- **SAMBROOK et al.** Molecular Cloning: A Laboratory Manual. Cold Spring Harbor Laboratory Press, 2001
- **AUSUBEL et al.** Short Protocols in Molecular Biology. John Wiley & Sons, Inc, 1999
- **WESSELS.** *Adv. Microb. Physio.,* 1997, vol. 38, 1-45
- **WOSTEN.** *Annu Rev. Microbiol.,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **MACCABE ; VAN ALFEN.** *App. Environ. Microbiol,* 1999, vol. 65, 5431-5435
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85
- **LINDER et al.** *Biomacromolecules,* 2001, vol. 2, 511-517